# EUROPÄISCHE PATENTANMELDUNG

(11) **EP 2 400 097 A2**
(43) Veröffentlichungstag der Anmeldung: **28.12.2011**
(21) Anmeldenummer: 11152968.1
(22) Anmeldetag: 01.02.2011
(51) Int. Cl.: E05F 15/10, H02J 9/06

(54) **Torantriebsvorrichtung und Betriebsverfahren**

(30) Priorität: 04.03.2010 DE 102010010159
(71) Anmelder: Hörmann KG Antriebstechnik, 33803 Steinhagen (DE)
(72) Erfinder: HATKE, Helmut, 49134, Wallenhorst (DE)
(74) Vertreter: Kastel, Stefan

(57) **Zusammenfassung**

Die Erfindung betrifft eine Torantriebsvorrichtung (10), mit einem Elektromotor (13) zum Antreiben einer Bewegung eines Torflügels eines Tores, insbesondere Garagentor, Industrietor oder Einfriedungstor,
einer Steuer- und/oder Überwachungseinrichtung (18) zum Steuern und/oder Überwachen der Antriebsbewegung, und
einer Energieversorgungseinrichtung (20) zum Versorgen des Elektromotors (12) und der Steuer- und/oder Überwachungseinrichtung (18) mit elektrischer Energie,

wobei die Energieversorgungseinrichtung (20) zwischen einem Normalbetriebsmodus und einem Bereitschaftsmodus schaltbar ist und eine Transformatoreinrichtung (26) aufweist, deren Primärseite (28) über eine Schalteinrichtung (S1) an eine Stromnetzanschlusseinrichtung (LINE, L1, G1) geschaltet ist, die zum Anschluss an ein Stromnetz (30) und zum Umwandeln der Netzspannung in eine Gleichspannung ausgebildet ist, wobei die Sekundärseite (32) der Transformatoreinrichtung (26) zum Liefern einer Ausgangsspannung (Uₒᵤₜ) zum Versorgen des Elektromotors (12) und der Steuer- und/oder Überwachungseinrichtung (18) ausgebildet ist,
wobei eine erste Regelungseinrichtung (36) zum Regeln der Ausgangsspannung (Uₒᵤₜ) in dem Normalbetriebsmodus durch Schalten der Schalteinrichtung (S1) mit einer ersten Impulsfolge (40) und eine zweite Regelungseinrichtung (38) zum Regeln der Ausgangsspannung (Uₒᵤₜ) in dem Bereitschaftsmodus durch Schalten der Schalteinrichtung (S1) mit einer zweiten Impulsfolge (42) vorgesehen ist.
Weiter ist ein Betriebsverfahren hierfür vorgesehen.

## Beschreibung

Die Erfindung betrifft eine Torantriebsvorrichtung zum motorischen Antreiben eines Tores mit einem Elektromotor zum Antreiben einer Bewegung eines Torflügels eines Tores, insbesondere Garagentor, Industrietor oder Einfriedungstor, einer Steuer- und/oder Überwachungseinrichtung zum Steuern und/oder Überwachen der Antriebsbewegung und einer Energieversorgungseinrichtung zum Versorgen des Elektromotors und der Steuer- und/oder Überwachungseinrichtung mit elektrischer Energie.

In einem Normalbetriebsmodus wird der Elektromotor und die Steuer- und/oder Überwachungseinrichtung mit elektrischer Energie versorgt. Der Motor treibt mittels der Energie aus der Energieversorgungseinrichtung den Torflügel an. Die Steuer-und/oder Überwachungseinrichtung steuert und/oder überwacht diese Antriebsbewegung.

In der Regel werden derartige auf dem Markt erhältliche Torantriebsvorrichtungen mittels Handsendern von der Ferne aus bedient. Damit die Steuer- und/oder Überwachungseinrichtung solche Bediensignale empfangen kann, lässt sich die Torantriebsvorrichtung in einen Bereitschaftsmodus schalten, in dem die Energieversorgungseinrichtung nur die Steuer- und/oder Überwachungseinrichtung mit elektrischer Energie versorgt, nicht aber den Elektromotor. Empfängt in einem solchen Bereitschaftsmodus die Steuer- und/oder Überwachungseinrichtung ein Befehlssignal zum Einleiten einer Antriebsbewegung, wird die Energieversorgungseinrichtung aus dem Bereitschaftsmodus in den Normalbetriebsmodus geschaltet, um den Elektromotor anzutreiben.

Zur galvanischen Trennung des Elektromotors und der Steuer- und/oder Überwachungseinrichtung von dem Stromnetz ist weiter ein Transformator mit einer Primärseite und einer Sekundärseite vorgesehen.

Aufgabe der Erfindung ist es, eine derartige Torantriebsvorrichtung insgesamt sparsamer im Energieverbrauch zu machen. Außerdem soll ein energiesparendes Betriebsverfahren für eine solche Torantriebsvorrichtung bereitgestellt werden.

Diese Aufgabe wird durch eine Torantriebsvorrichtung mit den Merkmalen des Anspruches 1 sowie einem Betriebsverfahren mit den Schritten des Anspruches 8 gelöst.

Vorteilhafte Ausgestaltungen der Erfindung sind Gegenstand der Unteransprüche.

Die Erfindung schafft eine Torantriebsvorrichtung mit:
einem Elektromotor zum Antreiben einer Bewegung eines Torflügels eines Tores, insbesondere Garagentor, Industrietor oder Einfriedungstor,
einer Steuer- und/oder Überwachungseinrichtung zum Steuern und/oder Überwachen der Antriebsbewegung, und
einer Energieversorgungseinrichtung zum Versorgen des Elektromotors und der Steuer- und/oder Überwachungseinrichtung mit elektrischer Energie,
wobei die Energieversorgungseinrichtung zwischen einem Normalbetriebsmodus und einem Bereitschaftsmodus schaltbar ist und eine Transformatoreinrichtung aufweist, deren Primärseite über eine Schalteinrichtung an eine Stromnetzanschlusseinrichtung geschaltet ist, die zum Anschluss an ein Stromnetz und zum Umwandeln der Netzspannung in eine Gleichspannung ausgebildet ist, wobei die Sekundärseite der Transformatoreinrichtung zum Liefern einer Ausgangsspannung zum Versorgen des Elektromotors und der Steuer- und/oder Überwachungseinrichtung ausgebildet ist,
wobei eine erste Regelungseinrichtung zum Regeln der Ausgangsspannung in dem Normalbetriebsmodus durch Schalten der Schalteinrichtung mit einer ersten Impulsfolge und eine zweite Regelungseinrichtung zum Regeln der Ausgangsspannung in dem Bereitschaftsmodus durch Schalten der Schalteinrichtung mit einer zweiten Impulsfolge vorgesehen ist.

Mittels der Schalteinrichtung und der ersten und zweiten Regelungseinrichtung lässt sich eine unterschiedliche Regelung der Ausgangsspannung in dem Normalbetriebsmodus und dem Bereitschaftsmodus schaffen. Hierdurch können sowohl der Normalbetriebsmodus als auch der Bereitschaftsmodus jeweils für sich derart geregelt werden, dass möglichst viel Energie eingespart wird. Die Regelung erfolgt über unterschiedliche Impulsfolgen zum Schalten der Schalteinrichtung.

Zum Liefern der Gleichspannung ist vorzugsweise vorgesehen, dass die Stromnetzanschlusseinrichtung einen Stromnetz-Eingangsfilter zur Störspannungsunterdrückung und einen Gleichrichter mit Siebkondensator zum Umwandeln der Netzspannung in die Gleichspannung aufweist.

Ein Wechsel zwischen dem Normalbetriebsmodus und dem Bereitschaftsmodus wird vorzugsweise automatisch durchgeführt. Hierzu ist weiter vorzugsweise vorgesehen, dass eine Betriebsmodusschalteinrichtung vorgesehen ist, die entweder die erste oder die zweite Regeleinrichtung aktiv schaltet, um zwischen dem Normalbetrieb oder dem Bereitschaftsbetrieb umzuschalten. Die Betriebsmodusschalteinrichtung schaltet vorzugsweise selbsttätig zwischen Normalbetrieb und Bereitschaftsbetrieb um. Hierzu ist gemäß einer weiter bevorzugten Ausgestaltung vorgesehen, dass die Betriebsmodusschalteinrichtung den Betriebmodus abhängig von der auf der Sekundärseite benötigten Energie, insbesondere abhängig von der Stromstärke auf der Sekundärseite, schaltet.

Die Regelungseinrichtungen regeln die Ausgangsspannung an der Sekundärseite der Transformatoreinrichtung vorzugsweise durch Schalten der Schalteinrichtung mittels Impulsen, wobei das Impuls-Pausen-Verhältnis zum Einstellen der Ausgangsspannung geregelt wird. Die Impulse werden vorzugsweise mit einer Schaltfrequenz im kHz-Bereich geschaltet. Die zweite Regelungseinrichtung für den Bereitschaftsmodus ist vorzugsweise zum Erzeugen von Impulspaketen ausgebildet, deren Länge entsprechend anpassbar ist. Durch die Anpassung der Länge der Impulspakete lässt sich die Stromaufnahme im Bereitschaftsmodus minimieren.

Die erste Regelungseinrichtung schaltet die Schalteinrichtung mit einer Schaltfrequenz größer ca. 800 Hz derart zwischen einem AN-Zustand und einem AUS-Zustand, dass die Ausgangsspannung im Wesentlichen konstant bleibt.

In einer weiter bevorzugten Ausgestaltung ist weiter vorgesehen, dass die zweite Regelungseinrichtung die Schalteinrichtung mittels Impulspaketen ansteuert, wobei die Impulspakete mehrere Schaltimpulse zum Schalten der Schalteinrichtung zwischen einem AN-Zustand und einem AUS-Zustand mit einer Schaltfrequenz derart aufweist, so dass die Ausgangsspannung während der Dauer eines Impulspaketes im Wesentlichen konstant gehalten wird.

Weiter bevorzugt ist vorgesehen, dass eine zweite Regelungseinrichtung derart ausgebildet ist, dass die Impulspakete mit einer vorgegebenen Modulationsfrequenz, die wesentlich geringer als die Schaltfrequenz ist, aufeinander folgen und dass die Länge der Impulspakete abhängig von einem Ausgangsstrom auf der Sekundärseite, der Schaltfrequenz und dem Eigenverbrauch der Energieversorgungseinrichtung einstellbar ist.

Die Erfindung schafft weiter ein Betriebsverfahren zum Betreiben einer Torantriebsvorrichtung, die einen Elektromotor zum Antreiben einer Bewegung eines Torflügels eines Tores, insbesondere Garagentor, Industrietor oder Einfriedungstor, und eine Steuer- und/oder Überwachungseinrichtung zum Steuern und/oder Überwachen der Antriebsbewegung, aufweist, mit den Schritten:
a) Erfassen einer Stromstärke an einer Sekundärseite einer Transformatoreinrichtung einer Energieversorgungseinrichtung zum Versorgen der Torantriebsvorrichtung mit Energie aus einem Stromnetz,
b) Vergleichen der Ist-Stromstärke mit einer vorgegeben Schwelle,
c) Regeln einer Ausgangsspannung an der Sekundärseite im Fall, dass die Schwelle überschritten ist, durch Schalten einer Schalteinrichtung auf der Primärseite mit einer ersten Impulsfolge für einen Normalbetriebsmodus und
d) Regeln der Ausgangsspannung im Fall, dass die Schwelle unterschritten wird, durch Schalten der Schalteinrichtung mit einer zweiten Impulsfolge für einen Bereitschaftsmodus.

Vorzugsweise ist vorgesehen, dass Impulse in der ersten Impulsfolge mit einer Schaltfrequenz derart erzeugt werden, dass die Ausgangsspannung im Wesentlichen konstant bleibt.

Weiter bevorzugt ist vorgesehen, dass zum Bilden der zweiten Impulsfolge Impulspakete mit einer Modulationsfrequenz aufeinander folgend erzeugt werden, wobei in jedem Impulspaket mehrere Schaltimpulse mit einer Schaltfrequenz aufeinanderfolgend derart erzeugt werden, dass die Ausgangsspannung zumindest während der Dauer des jeweiligen Impulspaketes konstant bleibt.

Insbesondere ist vorgesehen, dass die Dauer der Impulspakete abhängig von dem Ausgangsstrom, der Schaltfrequenz und dem Eigenbedarf der Torantriebsvorrichtung im Bereitschaftsbetrieb ohne Betrieb des Elektromotors eingestellt wird.

Ein Ausführungsbeispiel der Erfindung wird nachfolgend anhand der beigefügten Zeichnung näher erläutert. Darin zeigt:
- Fig. 1: ein Blockschaltbild einer Torantriebsvorrichtung gemäß einer bevorzugten Ausführungsform;
- Fig. 2: eine vergrößerte Darstellung eines Teils einer Energieversorgungseinrichtung der Torantriebsvorrichtung von Fig. 1.

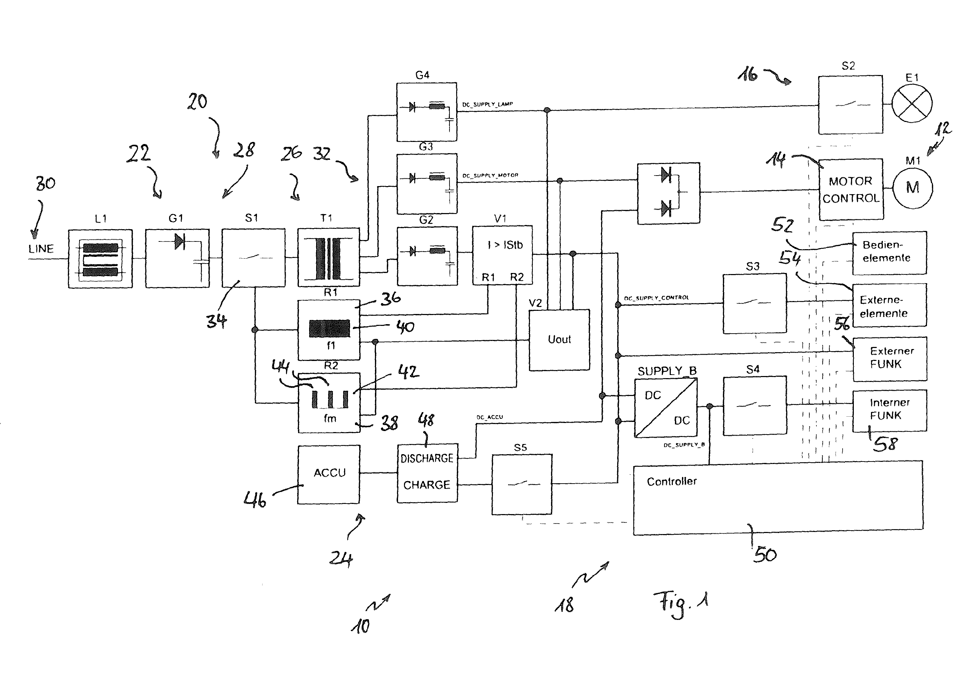

Die in Fig. 1 insgesamt mit dem Bezugszeichen 10 bezeichnete Torantriebsvorrichtung dient zum Antreiben eines nicht näher dargestellten Tores, wie beispielsweise Garagentores, Einfriedungstores oder Industrietores. Vorzugsweise ist die Torantriebsvorrichtung zum Antreiben eines Garagentores oder eines Einfahrtstores für ein Privatgrundstück, beispielsweise als Schlepptorantrieb, als Schiebetorantrieb, als Wellentorantrieb oder als Drehtorantrieb ausgebildet. Selbstverständlich sind auch andere Torantriebsarten als mögliche Ausführungsformen denkbar.

Die Torantriebsvorrichtung 10 weist einen Elektromotor 12 mit Motorsteuerung 14, eine Beleuchtungseinheit 16, eine Steuer- und Überwachungseinrichtung 18 und eine Energieversorgungseinrichtung 20 auf.

Die Energieversorgungseinrichtung 20 weist ein Schaltnetzteil 22 und eine Energiespeichereinheit 24 auf.

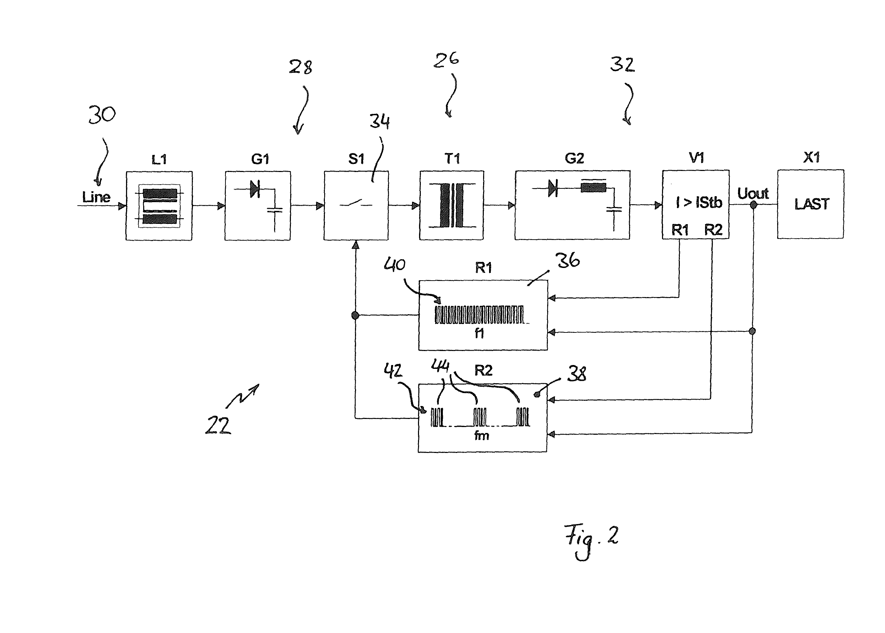

Wie aus Fig. 1 und Fig. 2 ersichtlich ist, weist das Schaltnetzteil 22 eine Transformatoreinrichtung 26 mit einem Transformator T1, der eine Primärseite 28 zum Anschluss an ein Stromversorgungsnetz 30 und eine Sekundärseite 32 zum Liefern einer Ausgangsspannung U_{Out} hat, auf. Auf der Primärseite 28 weist das Schaltnetzteil 22 einen Stromnetz-Eingangsfilter L1 zur Störspannungsunterdrückung, einen ersten Gleichrichter G1 mit Siebkondensator (sog. Zwischenkreis) und eine erste Schalteinrichtung S1 mit einem durch elektrische Spannungen schaltbaren Leistungstransistor 34 auf. Die Primärseite des Transformators T1 ist über die erste Schalteinrichtung S1, den ersten Gleichrichter G1 und den Stromnetz-Eingangsfilter L1 an das Stromversorgungsnetz 30 angeschlossen. Auf der zur Primärseite 28 galvanisch getrennten Sekundärseite 32 weist das Schaltnetzteil einen zweiten Gleichrichter G2 zum Liefern einer Gleichspannung für die Steuer- und
Überwachungseinrichtung 18, einen dritten Gleichrichter G3 zum Liefern einer Gleichspannung für den Elektromotor 12, einen vierten Gleichrichter G4 zum Liefern einer Gleichspannung für die Beleuchtungseinheit 16 und einen ersten Vergleicher V1 auf.

Der erste Vergleicher V1 vergleicht den zur durch die durch den Elektromotor 12, die Beleuchtungseinheit 16 oder die Steuer- und Überwachungseinrichtung 18 gebildeten Last X1 fließenden Ausgangsstrom I mit einem fest vorgegebenen Standby-Strom IStb (z. B. 10 mA) und liefert eine logische "1" auf dessen Ausgang R1, wenn I > IStb ist, und sonst auf diesem Ausgang R1 eine logische "0". Wenn I kleiner oder gleich IStb ist, liefert der erste Vergleicher V1 eine logische "1" auf dessen Ausgang R2, ansonsten wird auf diesem Ausgang R2 eine logische "0" geliefert.

An den Ausgang R1 ist eine erste Regelungseinrichtung 36 zum Regeln der Ausgangsspannung Uₒᵤₜ in dem Normalbetriebsmodus angeschlossen. An den zweiten Ausgang R2 des Vergleichers V1 ist eine zweite Regelungseinrichtung 38 zum Steuern der Ausgangsspannung U_{Out} in einem Bereitschaftsmodus angeschlossen. Die Ausgänge der Regelungseinrichtungen 36, 38 sind an die erste Schalteinrichtung S1 angeschlossen, um den Leistungstransistor 34 mittels einer durch die erste Regelungseinrichtung 36 erzeugten ersten Impulsfolge 40 oder mittels einer durch die zweite Regelungseinrichtung 38 erzeugten zweiten Impulsfolge 42 zu schalten. Die erste Schalteinrichtung S1 dient zum Zerhacken der Eingangs-Gleichspannung zwecks Speisung der Primärspule des Transformators T1.

In der ersten Impulsfolge 40 werden Impulse mit einer festen Schaltfrequenz f1 im kHz-Bereich (z.B. größer 800 Hz) erzeugt. Die zweite Impulsfolge 42 weist Impulspakete 44 auf, die jeweils mehrere mit der Schaltfrequenz f1 aufeinander folgende Impulse aufweisen. Die Impulspakete 44 folgen mit einer festen Modulationsfrequenz fm aufeinander. Die Energiespeichereinrichtung 24 weist einen Energiespeicher in Form eines Akkumulators 46 und eine Lade-/Entladeschaltung 48 für den Akkumulator 46 auf. Die Lade-/Entladeschaltung 48 ist zum Liefern einer Akkuspannung an den Elektromotor 12 angeschlossen. Zum Aufladen des Akkumulators 46 ist die Lade-/Entladeschaltung über eine fünfte Schalteinrichtung S5 an den zweiten Gleichrichter G2 angeschlossen.

Weiter ist ein zweiter Vergleicher V2 vorgesehen, der die Ausgangsspannung U_{Out} mit vorgegebenen Sollwerten vergleicht und ein entsprechendes Regelungssignal an die Regelungseinrichtungen 36, 38 abgibt.

Die Steuer- und Überwachungseinrichtung 18 weist eine zentrale Steuereinheit 50 in Form eines Mikroprozessors, Benutzerschnittstellen in Form von internen Bedienelementen 52 und über eine dritte Schalteinrichtung S3 zuschaltbare externen Bedienelementen 54 und Funkschnittstellen in Form eines externen Funks 56 und eines über eine vierte Schalteinrichtung S4 zuschaltbaren internen Funks 58 auf. Über die Funkschnittstellen 56, 58 lassen sich Fernbedienungssignale zum Ein- oder Ausschalten der Beleuchtungseinheit 16 und/oder des Elektromotors 12 empfangen.

Die Beleuchtungseinheit 16 ist mit einer zweiten Schalteinrichtung S2 und einer Lampe E1 versehen. Die erste bis vierte Schalteinrichtung S2, S3, S4, die Motorsteuerung 14 sowie die Bedienelemente 42, 54 und die Funkschnittstellen 56, 58 sind zwecks Steuerung an die zentrale Steuereinheit 50 angeschlossen.

Mittels des ersten Vergleichers V1 erfolgt eine Umschaltung der Energieversorgungseinrichtung 20 zwischen dem Normalbetriebsmodus und dem Bereitschaftsmodus. Für das Umschalten wird in der oben geschilderten Weise entweder die erste Regelungseinrichtung 36 oder die zweite Regelungseinrichtung 38 aktiv gesetzt. Im Normalbetrieb (I > IStb) wird die Ausgangsspannung U_{Out} durch die erste Regelungseinrichtung 36 eingestellt. Die erste Regelungseinrichtung 36 weist ebenfalls eine galvanische Trennung zwischen der Primärseite 28 und der Sekundärseite 30 auf. In der ersten Regelungseinrichtung 36 wird die Ausgangsspannung U_{Out} über das Verhältnis S1_on/S1_off, welches typischerweise in dem Bereich von 0,1 bis 1 veränderbar ist, mit der festen Schaltfrequenz f1 im kHz-Bereich konstant gehalten. Die zweite Regelungseinrichtung 38 ist dann nicht aktiv.

Wenn aber der Ausgangsstrom I der Last X1 kleiner oder gleich IStb wird, übernimmt die zweite Regelungseinrichtung 38 die Regelung der Ausgangsspannung Uout. Die zweite Regelungseinrichtung 38 ist ebenfalls mit einer galvanischen Trennung zwischen der Primärseite 28 und der Sekundärseite 30 versehen. Die Regelung der zweiten Regelungseinrichtung 38 erfolgt über die Impulspakete 44, die auch als Burst-Impulse bezeichnet werden können. Diese Impulspakete 44 steuern mit der festen Modulationsfrequenz fm im niederfrequenten Bereich von 0,1 bis etwa 2 Hz die erste Schalteinrichtung S1 an.

Die Länge des jeweiligen Impulspaketes, die typischerweise zwischen 50 und 200 µsec. betragen kann, wird abhängig von dem Ausgangsstrom I, der Schaltfrequenz f1 und dem Eigenverbrauch eingestellt. Die Ausgangsspannung U_{Out} wird allerdings über die erste Schalteinrichtung S1 ebenfalls über das Verhältnis S1_on/S1_off (typischerweise im Bereich von 0,1 bis 1 zu verändern) mit Impulsen im kHz-Bereich mit der Schaltfrequenz f1 konstant gehalten. Die erste Regelungseinrichtung 36 ist dann nicht aktiv.

Diese zweite Regelungseinrichtung 38 ermöglicht es, die Verluste der Energieversorgungseinrichtung 20 in dem Bereitschaftsmodus gegenüber einer Energieversorgungseinrichtung 20 ohne solche Bereitschaftsmodusregelung auf bis zu 10 bis 20% zu reduzieren.

### Bezugszeichenliste:

- 10: Torantriebsvorrichtung
- 12: Elektromotor
- 14: Motorsteuerung
- 16: Beleuchtungseinheit
- 18: Steuer- und Überwachungseinrichtung
- 20: Energieversorgungseinrichtung
- 22: Schaltnetzteil
- 24: Energiespeichereinheit
- 26: Transformatoreinrichtung
- 28: Primärseite
- 30: Stromversorgungsnetz
- 32: Sekundärseite
- 34: Leistungstransistor
- 36: erste Regelungseinrichtung
- 38: zweite Regelungseinrichtung
- 40: erste Impulsfolge
- 42: zweite Impulsfolge
- 44: Impulspakete
- 46: Akkumulator
- 48: Lade-Entladeschaltung
- 50: zentrale Steuereinheit
- 52: interne Bedienelemente
- 54: externe Bedienelemente
- 56: externer Funk
- 58: interner Funk
- E1: Lampe
- f1: Schaltfrequenz
- fm: Modulationsfrequenz
- G1: erster Gleichrichter
- G2: zweiter Gleichrichter
- G3: dritter Gleichrichter
- G4: vierter Gleichrichter
- M1: Gleichsstrommotor
- L1: Stromnetzeingangsfilter
- S1: erste Schalteinrichtung
- S2: zweite Schalteinrichtung
- S3: dritte Schalteinrichtung
- S4: vierte Schalteinrichtung
- S5: fünfte Schalteinrichtung
- R1: erster Ausgang des Vergleichers
- R2: zweiter Ausgang des Vergleichers
- T1: Transformator
- U_{Out}: Ausgangsspannung
- V1: Vergleicher
- V2: zweiter Vergleicher
- X1: Last

## Patentansprüche

1. Torantriebsvorrichtung (10), mit:
einem Elektromotor (12) zum Antreiben einer Bewegung eines Torflügels eines Tores, insbesondere Garagentor, Industrietor oder Einfriedungstor,
einer Steuer- und/oder Überwachungseinrichtung (18) zum Steuern und/oder Überwachen der Antriebsbewegung, und
einer Energieversorgungseinrichtung (20) zum Versorgen des Elektromotors (12) und der Steuer- und/oder Überwachungseinrichtung (18) mit elektrischer Energie,
wobei die Energieversorgungseinrichtung (20) zwischen einem Normalbetriebsmodus und einem Bereitschaftsmodus schaltbar ist und eine Transformatoreinrichtung (26) aufweist, deren Primärseite (28) über eine Schalteinrichtung (S1) an eine Stromnetzanschlusseinrichtung (LINE, L1, G1) geschaltet ist, die zum Anschluss an ein Stromnetz (30) und zum Umwandeln der Netzspannung in eine Gleichspannung ausgebildet ist, wobei die Sekundärseite (32) der Transformatoreinrichtung (26) zum Liefern einer Ausgangsspannung (Uₒᵤₜ) zum Versorgen des Elektromotors (12) und der Steuer- und/oder Überwachungseinrichtung (18) ausgebildet ist,
wobei eine erste Regelungseinrichtung (36) zum Regeln der Ausgangsspannung (Uₒᵤt) in dem Normalbetriebsmodus durch Schalten der Schalteinrichtung (S1) mit einer ersten Impulsfolge (40) und eine zweite Regelungseinrichtung (38) zum Regeln der Ausgangsspannung (Uₒᵤₜ) in dem Bereitschaftsmodus durch Schalten der Schalteinrichtung (S1) mit einer zweiten Impulsfolge (42) vorgesehen ist.

2. Torantriebsvorrichtung (10) nach Anspruch 1,
**dadurch gekennzeichnet,**
**dass** die Stromnetzanschlusseinrichtung einen Stromnetz-Eingangsfilter (L1) zur Störspannungsunterdrückung und einen Gleichrichter (G1) mit Siebkondensator zum Umwandeln der Netzspannung in die Gleichspannung aufweist.

3. Torantriebsvorrichtung (10) nach einem der voranstehenden Ansprüche, **dadurch gekennzeichnet,**
**dass** eine Betriebsmodusschalteinrichtung (V1) vorgesehen ist, die entweder die erste (36) oder die zweite Regeleinrichtung (38) aktiv schaltet, um zwischen dem Normalbetrieb oder dem Bereitschaftsbetrieb umzuschalten.

4. Torantriebsvorrichtung (10) nach Anspruch 3,
**dadurch gekennzeichnet,**
**dass** die Betriebsmodusschalteinrichtung (V1) den Betriebmodus abhängig von der auf der Sekundärseite (32) benötigten Energie, insbesondere abhängig von der Stromstärke (1) auf der Sekundärseite (32), schaltet.

5. Torantriebsvorrichtung (10) nach einem der voranstehenden Ansprüche,
**dadurch gekennzeichnet,**
**dass** die erste Regelungseinrichtung (36) die Schalteinrichtung (S1) mit einer Schaltfrequenz (f1) größer ca. 800 Hz derart zwischen einem AN-Zustand und einem AUS-Zustand schaltet, dass die Ausgangsspannung (Uₒᵤₜ) im Wesentlichen konstant bleibt.

6. Torantriebsvorrichtung (10) nach einem der voranstehenden Ansprüche,
**dadurch gekennzeichnet,**
**dass** die zweite Regelungseinrichtung (36) die Schalteinrichtung (S1) mittels Impulspaketen (44) ansteuert, wobei die Impulspakete (44) mehrere Schaltimpulse zum Schalten der Schalteinrichtung (S1) zwischen einem AN-Zustand und einem AUS-Zustand mit einer Schaltfrequenz (f1) derart aufweist, so dass die Ausgangsspannung während der Dauer eines Impulspaketes (44) im Wesentlichen konstant gehalten wird.

7. Torantriebsvorrichtung (10) nach Anspruch 6,
**dadurch gekennzeichnet,**
**dass** zweite Regelungseinrichtung (36) derart ausgebildet ist, dass die Impulspakete (44) mit einer vorgegebenen Modulationsfrequenz (fm), die wesentlich geringer als die Schaltfrequenz (f1) ist, aufeinander folgen und dass die Länge der Impulspakete (44) abhängig von einem Ausgangsstrom (1) auf der Sekundärseite (32), der Schaltfrequenz (f1) und dem Eigenverbrauch der Energieversorgungseinrichtung oder der Torantriebsvorrichtung im Bereitschaftsmodus einstellbar ist.

8. Betriebsverfahren zum Betreiben einer Torantriebsvorrichtung (10), die einen Elektromotor (12) zum Antreiben einer Bewegung eines Torflügels eines Tores, insbesondere Garagentor, Industrietor oder Einfriedungstor, und eine Steuer- und/oder Überwachungseinrichtung (18) zum Steuern und/oder Überwachen der Antriebsbewegung, aufweist, mit den Schritten:
a) Erfassen einer Stromstärke (I) an einer Sekundärseite (32) einer Transformatoreinrichtung (26) einer Energieversorgungseinrichtung (20) zum Versorgen der Torantriebsvorrichtung (10) mit Energie aus einem Stromnetz (30),
b) Vergleichen der Ist-Stromstärke (I) mit einer vorgegeben Schwelle (IStb),
c) Regeln einer Ausgangsspannung (Uₒᵤₜ) an der Sekundärseite (32) im Fall, dass die Schwelle (IStb) überschritten ist, durch Schalten einer Schalteinrichtung (S1) auf der Primärseite (28) mit einer ersten Impulsfolge (40) für einen Normalbetriebsmodus und
d) Regeln der Ausgangsspannung (Uₒᵤₜ) im Fall, dass die Schwelle (IStb) unterschritten wird, durch Schalten der Schalteinrichtung (S1) mit einer zweiten Impulsfolge (42) für einen Bereitschaftsmodus.

9. Betriebsverfahren nach Anspruch 8,
**dadurch gekennzeichnet,**
**dass** Impulse in der ersten Impulsfolge (40) mit einer Schaltfrequenz (f1) derart erzeugt werden, dass die Ausgangsspannung (Uₒᵤₜ) im Wesentlichen konstant bleibt.

10. Betriebsverfahren nach einem der Ansprüche 8 oder 9,
**dadurch gekennzeichnet,**
**dass** zum Bilden der zweiten Impulsfolge (42) Impulspakete (44) mit einer Modulationsfrequenz (fm) aufeinander folgend erzeugt werden, wobei in jedem Impulspaket (44) mehrere Schaltimpulse mit einer Schaltfrequenz (f1) aufeinanderfolgend derart erzeugt werden, dass die Ausgangsspannung (Uₒᵤₜ) zumindest während der Dauer des jeweiligen Impulspaketes (44) konstant bleibt.

11. Betriebsverfahren nach Anspruch 10,
**dadurch gekennzeichnet,**
**dass** die Dauer der Impulspakete (44) abhängig von dem Ausgangsstrom (I), der Schaltfrequenz (f1) und dem Eigenbedarf der Energieversorgungseinrichtung (20) oder der Torantriebsvorrichtung (10) im Bereitschaftsmodus ohne Betrieb des Elektromotors (12) eingestellt wird.
